# EUROPEAN PATENT APPLICATION

(11) **EP 1 675 115 A2**
(43) Date of publication of application: **28.06.2006**
(21) Application number: 05257925.7
(22) Date of filing: 21.12.2005
(51) Int. Cl.: G11B 17/04

(54) **Electronic apparatus including recording and reproducing device**

(30) Priority: 24.12.2004 JP 2004373316
(71) Applicant: ORION ELECTRIC CO., Ltd., Fukui 915-8555 (JP)
(72) Inventor: Shimizu, Daisuke, Orion Electric Co., Ltd., Echizen-city, Fukui 915-8555 (JP); Mukougawa, Hidenobu, Orion Electric Co., Ltd., Echizen-city, Fukui 915-8555 (JP); Horie, Takayuki, Orion Electric Co., Ltd., Echizen-city, Fukui 915-8555 (JP); Mitomori, Yasuo, Orion Electric Co., Ltd., Echizen-city, Fukui 915-8555 (JP); Yoshida, Tsuyoshi, Orion Electric Co., Ltd., Echizen-city, Fukui 915-8555 (JP)
(74) Representative: Paget, Hugh Charles Edward

(57) **Abstract**

To prevent a disk broken in a disk device from jumping to the outside of an electronic apparatus. An electronic apparatus 1 constructed an outer shell by a casing 2 with a front portion opened and a front panel 3 mounted to the opened front portion of the casing 2. At a time of rotating a disk D, the recessed part 5 which is formed at an edge portion of an opening 4 and the boss part 12 at an upper portion of a disk tray 11 are provided side by side to be disposed to close a gap between the front panel 3 and the disk tray 11 so that the broken pieces of the disk D do not jump out of the electronic apparatus from the opening 4.

## Description

### BACKGROUND OF THE INVENTION

### Field of the Invention

The present invention relates to an electronic apparatus including a recording and reproducing device capable of recording and reproducing a disk as a recording medium such as a DVD, and more specifically to an electronic apparatus including a recording and reproducing device which prevents broken pieces of a disk from jumping outside the electronic apparatus when the disk rotating for recording and reproducing is broken.

### Description of the Related Art

Conventionally, electronic apparatuses such as a DVD recorder and a television receiving set including disk devices each of which houses a disk tray with a disk placed thereon in a casing by a tray opening and closing mechanism having a driving source such as a motor, and rotates a disk in a state in which the disk floats from the disk tray to perform recording and reproduction are used. As such an electronic apparatus, Japanese Patent Laid-Open Publication No. 2002-133852 (Patent Document 1) discloses an optical disk device which prevents broken pieces of an optical disk from jumping to an outside when the optical disk in a rotating state is broken by disposing an arc-shaped protruding ridge corresponding to the shape of the disk in the vicinity of an outer peripheral edge portion of the optical disk in order to prevent an optical disk, which is damaged and broken, from scattering outside the disk device at the time of rotation that is the recording and reproducing state of the optical disk.

However, in the above described Patent Document 1, the protruding ridge is provided in order that the broken disk does not jump outside, but since the disk rotates at a high speed, and the protruding ridge is disposed in the vicinity of the peripheral edge portion of the disk device, the broken pieces of the disk have no where to go and have the possibility of getting over the protruding ridge and jumping to an outside, when the rotating disk is broken.

### SUMMARY OF THE INVENTION

The present invention is made in view of the above described problems, and has an object to provide an electronic apparatus including a recording and reproducing device which reliably prevents a disk broken inside the disk device from jumping to the outside.

An electronic apparatus including a recording and reproducing device according to claim 1 of the present invention is an electronic apparatus including a recording and reproducing device having at least a disk tray on which a disk is placed and a turn table which rotationally drives the disk placed on the above described disk tray inside the electronic apparatus constructing an outer shell by a casing with a front portion opened and a front panel mounted to the opened front portion of the casing, and is characterized in that a recessed part is formed at an edge portion of an opening which is formed in the above described front panel and from which the above described disk tray is made to come in and go out, the above described recessed part and a projected boss part provided at the upper portion of the above described disk tray are disposed to be opposed in a direction in which the above described disk tray comes in and goes out, the above described recessed part and the above described boss part are provided side by side in a width direction of the above described electronic apparatus when the above described disk is rotationally driven by the above described turn table, and a gap between the above described front panel and the above described disk tray is closed by the front panel at which the above described recessed part is formed and the front portion of the above described disk tray provided with the above described boss part so that broken pieces of the above described disk do not jump outside from the above described opening.

According to claim 1, the broken pieces of the broken disk can be prevented from jumping outside from the gap between the front panel and the disk tray by the front panel which constructs the outer shell of the electronic apparatus and the front portion of the disk tray, and therefore, when a user or the like uses the electronic apparatus, if the disk is broken by an unforeseen accident, the broken pieces of the disk can be prevented from jumping outside the electronic apparatus.

The electronic apparatus including a recording and reproducing device of claim 2 of the present invention is, in the electronic apparatus including a recording and reproducing device according claim 1, characterized in that an opening and closing door which closes the opening is disposed at the above described opening.

By the construction of claim 2, the broken pieces of the disk can be further reliably prevented from scattering outside the electronic apparatus by closing the opening of the front panel by the opening and closing door. Since the inside of the electronic apparatus can be prevented from being exposed from the opening by disposing the opening and closing door at the opening of the front panel, beauty of the appearance design of the electronic apparatus is not impaired.

The electronic apparatus including a recording and reproducing device of claim 3 of the present invention is, in the electronic apparatus including a recording and reproducing device according to claim 2, characterized in that the above described opening and closing door is rotatably provided and closes the above described opening by a biasing force of an elastic body.

According to the construction of claim 3, by closing the opening by the opening and closing door by the biasing force of the elastic body, scattering of the broken pieces of the disk to the outside of the electronic apparatus can be prevented, and entry of foreign substances such as dust into the electronic apparatus from the outside can be prevented. Further, the disk tray comes in and goes out from the opening against the biasing force of the elastic body, and thereby, the opening and closing operation of the opening and closing door can be realized with the simple structure with the small number of components.

The electronic apparatus including a recording and reproducing device of claim 4 of the present invention is, in the electronic apparatus including a recording and reproducing device according to claim 3, characterized in that attachable and detachable mounting means which hold the above described opening and closing door are provided.

According to the construction of claim 4, the attachable and detachable opening and closing door can be fitted, and even if the opening and closing door are broken, the opening and closing door is replaced easily, whereby the broken pieces of the disk can be prevented from jumping outside the electronic apparatus.

The electronic apparatus including a recording and reproducing device according to claim 5 of the present invention is, in the electronic apparatus including a recording and reproducing device according to claim 4, characterized in that the above described mounting means are a fitting recessed part provided at the above described front panel and a projected shaft part which is provided at the above described opening and closing door and is to be attached to this fitting recessed part.

According to the construction of claim 5, since the shaft part is attached to the fitting recessed part, and the opening and closing door can be repeatedly attached to the front panel, even if the opening and closing door is broken, it can be replaced with another opening and closing door, and the broken pieces of the disk can be prevented from jumping outside the electronic apparatus.

### BRIEF DESCRIPTION OF THE DRAWINGS

FIG. 1 is a front view showing an electronic apparatus including a recording and reproducing device in this embodiment.
FIG. 2 is a front view of the electronic apparatus showing the state in which an opening and closing door is removed in the same.
FIG. 3 is a sectional view of the electronic apparatus showing the state in which the disk tray is housed in the same.
FIG. 4 is a sectional view of the electronic apparatus showing the state in which the disk tray is discharged in the same.
FIG. 5 is a plane view showing the state in which the disk tray is seen from above in the same.
FIG. 6 is a side view of the disk tray in the same.
FIG. 7 is a sectional view of the disk tray in the same.
FIG. 8 is an enlarged sectional view of a main part of the electronic apparatus in the same.

### DETAILED DESCRIPTION OF THE PREFERRED EMBODIMENTS

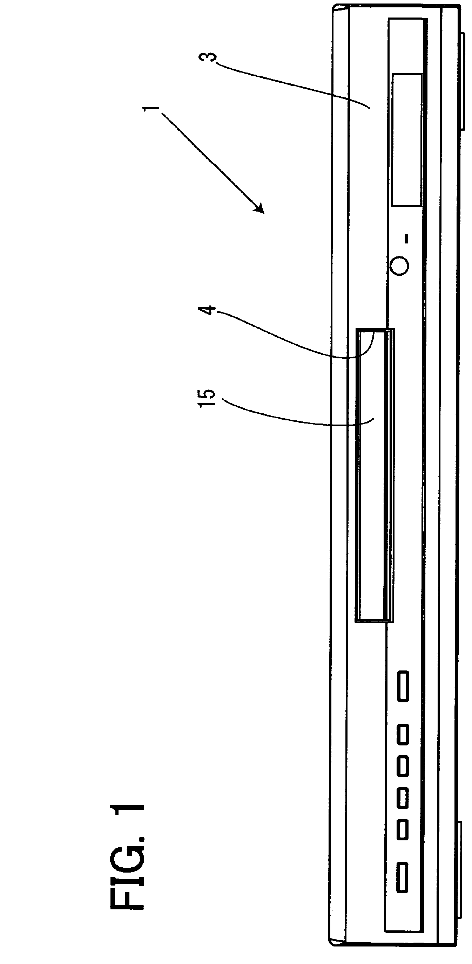

Hereinafter, an embodiment as the best mode for carrying out the present invention will be described based on FIGS. 1 to 8. Of course, it goes without saying that the present invention is easily applicable to the other constructions than that described in the embodiment within the range without departing from the spirit of the invention.

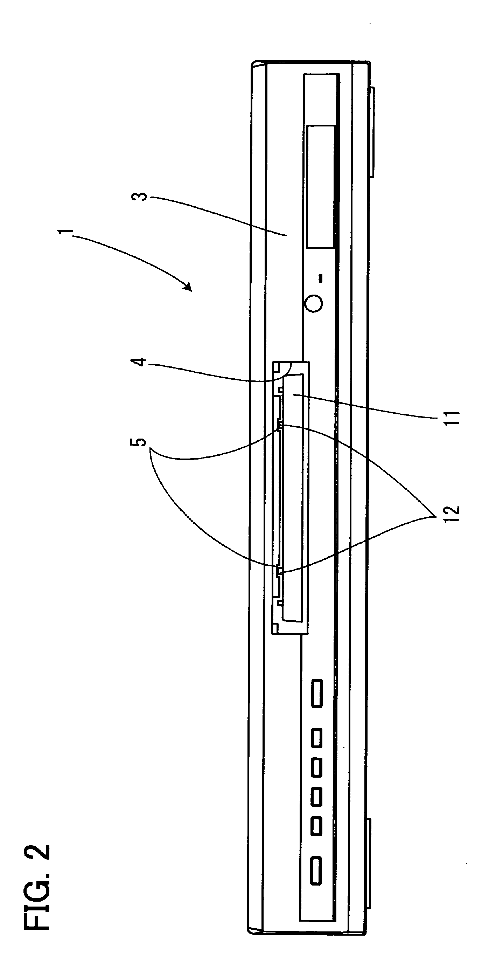

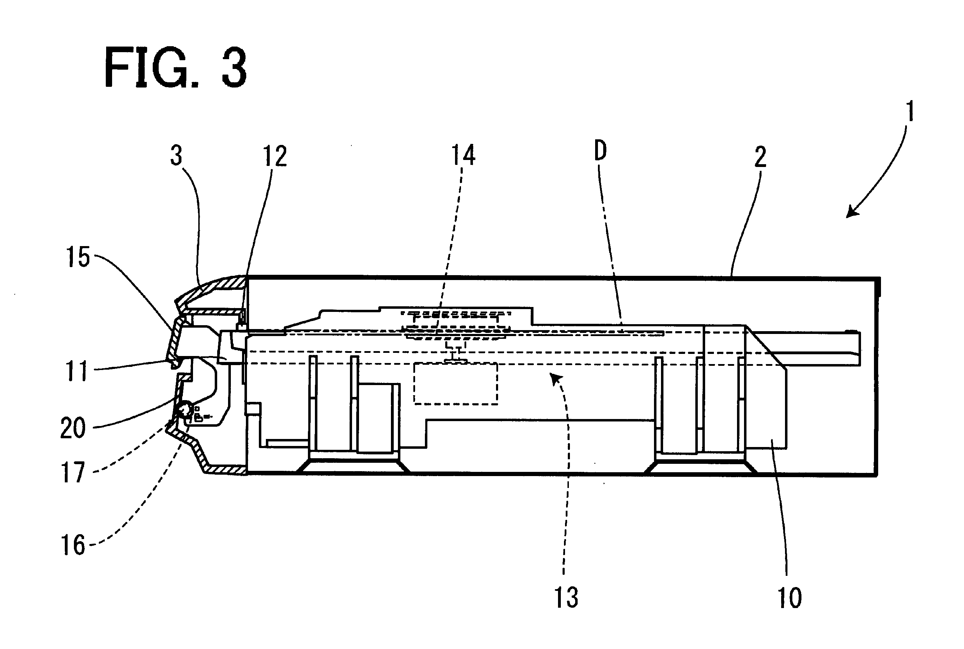

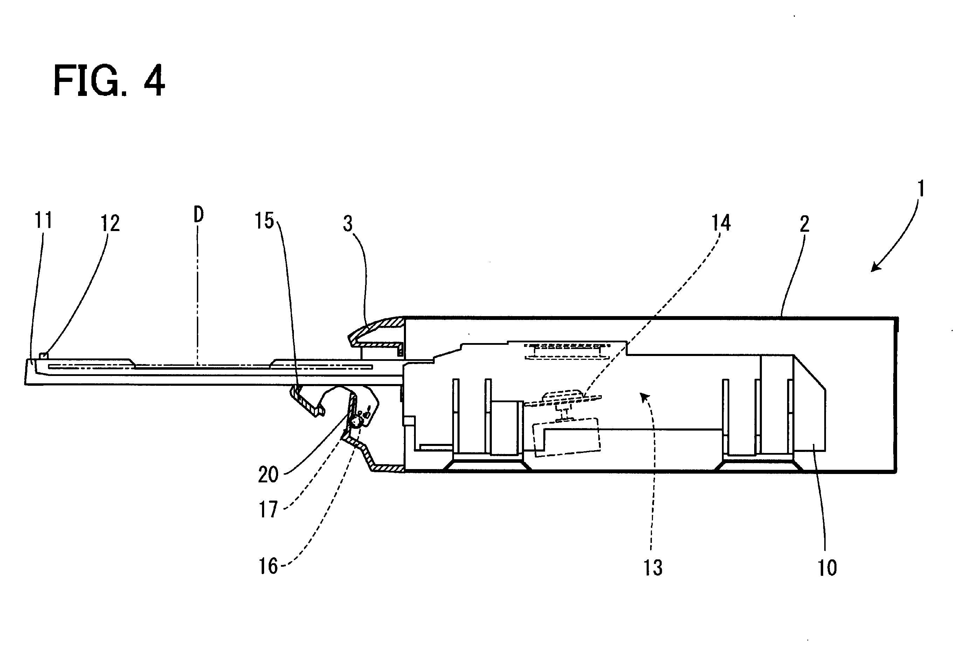

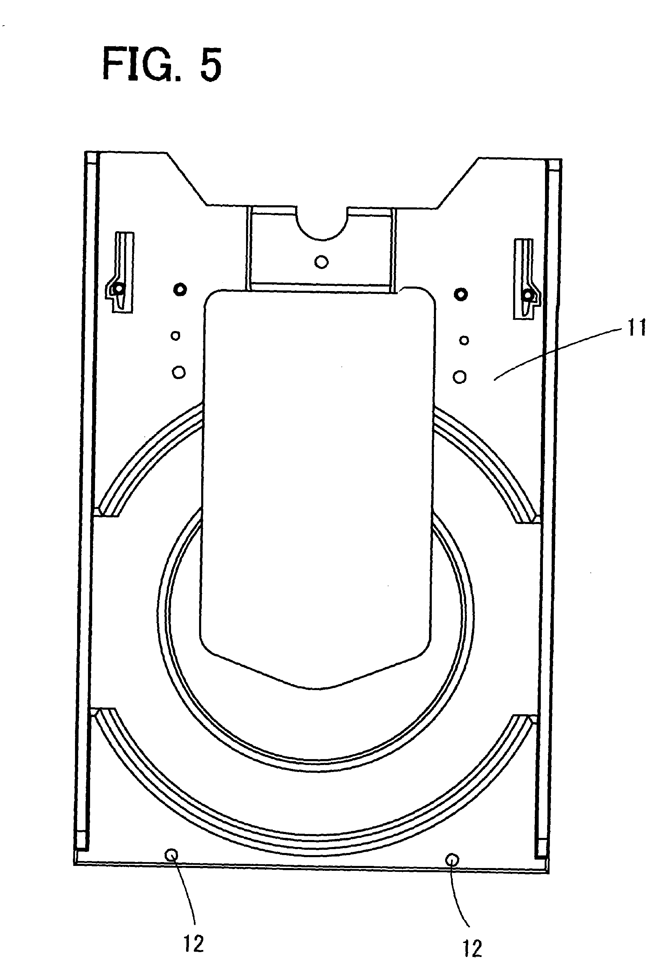

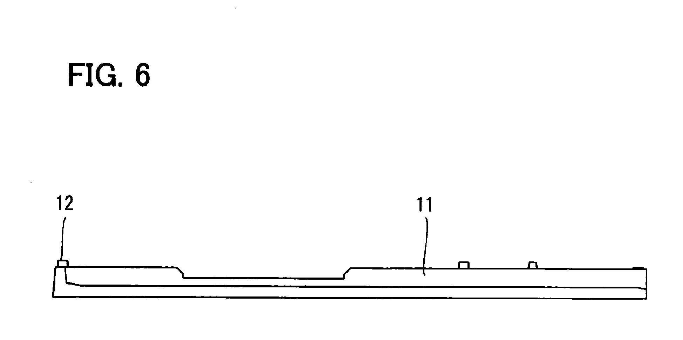

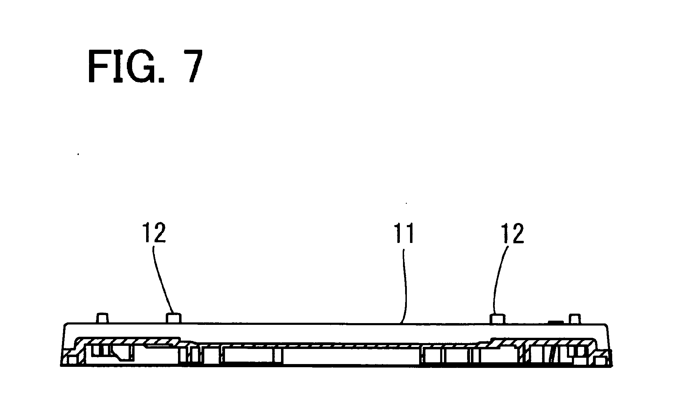

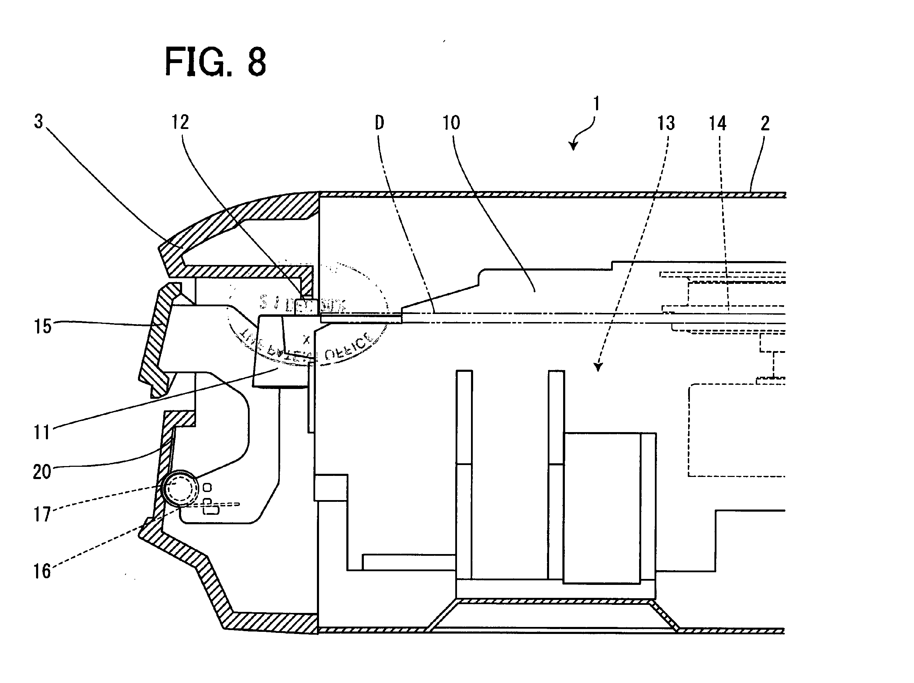

FIG. 1 is a front view of an electronic apparatus including a recording and reproducing device in this embodiment, FIG. 2 is a front view of the electronic apparatus showing a state in which an opening and closing door is removed, FIG. 3 is a sectional view of the electronic apparatus showing a state in which a disk tray is housed, FIG. 4 is a sectional view of the electronic apparatus showing a state in which the disk tray is discharged, FIG. 5 is a plane view showing a state in which the disk tray is seen from above, FIG. 6 is a side view of the disk tray, FIG. 7 is a sectional view of the disk tray and FIG. 8 is an enlarged sectional view of a main part of the electronic apparatus.

An electronic apparatus 1 shown in FIG. 1 records and reproduces a disk D which is a recording medium such as a DVD (Digital Versatile Disk), a front panel 3 is mounted to a front portion of a casing 2, and an outer shell of the electronic apparatus 1 is formed into a substantially box shape.

As shown in FIGS. 2 to 4, a recording and reproducing device 10 is provided inside the outer shell of the electronic apparatus 1 constituted of the casing 2 and the front panel 3, the recording and reproducing device 10 includes a disk tray 11 which is taken into and out of the electronic apparatus 1, and as shown in FIGS. 5 to 7, a boss part 12 which is projected upward is integrally provided at an upper portion of a tip end of the disk tray. The disk tray 11 is made to come in and to out from an opening 4 formed in the front panel 3 by a disk tray opening and closing drive mechanism 13 constructed by a motor and a gear not shown.

The recording and reproducing device 10 is provided with a turn table 14 which is driven to rotate at a high speed with the disk D floating from the disk tray 11 in the state in which the disk D is placed on the disk tray 11 and the disk tray 11 is housed in the recording and reproducing device 10. The electronic apparatus 1 as one example of the present invention has both functions of recording and reproducing the disk D, but the present invention is not especially limited to this, and the electronic apparatus 1 may have either function of recording or reproducing.

In the electronic apparatus 1 in this embodiment, broken pieces of the disk D jumps out by a centrifugal force and contacts the front portion of the disk tray 11 provided with the boss part 12 and the front panel 3 on which a recessed part 5 is formed if the disk D is broken and scatters when the disk D in the reproducing and recording state rotates at a high speed, and therefore, the front portion of the disk tray 11 provided with the boss part 12 and the front panel 3 on which the recessed part 5 is formed are disposed to be spaced from the disk D, whereby it becomes possible to eliminate the fear that the broken pieces of the disk D vigorously contacts the protruding ridge and the broken pieces of the disk D jump outside by providing the protruding ridge in the vicinity of the disk D rotated at a high speed as in the prior art.

Two of the boss parts 12 are provided side by side in a width direction of the disk tray 11 at an upper portion of a tip end of the disk tray 11, and these boss parts 12 are disposed to be spaced as much as possible from the disk D which is rotated at a high speed by the turn table 14, whereby the broken pieces of the disk D, which are rotationally driven and have nowhere to go can be accumulated in a space portion included between the boss parts 12 and the disk D, and it becomes possible to prevent the broken pieces of the disk D from contacting the above described disk tray opening and closing drive mechanism 13 and the like and damaging them.

A recessed part 5 is formed at an upper edge portion of the opening 4 formed in the front panel 3 to correspond to the boss part 12 of the disk tray 11 as shown in FIG. 2, and the recessed part 5 has substantially the same dimensions as the width and the height of the boss part 12 of the disk tray 11 in the state where the electronic apparatus 1 is seen from the front, the boss part 12 and the recessed part 5 are disposed to opposed longitudinally, and at the time of rotational driving state of the disk D by the turn table 14, the boss parts 12 and the recessed parts 5 are arranged side by side in the width direction of the electronic apparatus 1 which is orthogonal to the insertion/discharge direction of the disk tray 11 to close a front portion of the recording and reproducing device 10 by the front panel 3 and the disk tray 11, thus making it possible to prevent broken pieces of the disk D which is broken at the time of being rotated from jumping outside the electronic apparatus 1.

Further, as shown in FIG. 8, an opening and closing door 15 is disposed at the opening 4 of the front panel 3, more specifically, the opening and closing door 15 is rotatably mounted to the casing 2 or the like and the opening and closing door 15 is disposed at the opening 4 in the closing state by an elastic substance such as a spring 20 which is mounted to a shaft part 17 of the opening and closing door 15, whereby even if the disk D is broken into pieces, such pieces can be prevented from scattering outside the electronic apparatus 1 from the opening 4. The opening and closing door 15 is opened and closed by the front portion of the disk tray 11 pushing out the back surface of the opening and closing door 15 against the biasing force of the spring 20 when the disk tray 11 is discharged.

As described above, in the electronic apparatus 1 of this embodiment, the recessed part 5 is formed at the edge portion of the opening part 4 formed in the front panel 3 from which the disk tray 11 is made to come in and go out, the recessed part 5 and the projected boss part 12 provided at the upper portion of the disk tray 11 are disposed to be opposed in the direction in which the disk tray 11 comes in and goes out, the recessed parts 5 and the boss parts 12 are provided side by side in the width direction of the electronic apparatus 1 to close a gap between the front panel 3 and the disk tray 11 by the front panel 3 at which the recessed parts 5 are formed and the front portion of the disk tray 11 at which the boss parts 12 are provided so that the broken pieces of the disk D do not jump to the outside from the opening 4 at the time of rotating the disk D at a high speed by the turn table 14. Thereby, the broken pieces of the disk D which is broken can be prevented from jumping outside the electronic apparatus from the gap between the front panel 3 and the disk tray 11 by the front panel 3 and the front portion of the disk tray 11. Namely, when a user or the like uses the electronic apparatus 1, if the disk D is broken by an unforeseen accident, the broken pieces can be prevented from jumping outside the electronic apparatus 1, and therefore, the safe electronic apparatus 1 which can avoid the broken pieces hitting and hurting the user or the like can be provided.

Since the opening and closing door 15 which closes the opening 4 is disposed at the opening 4, and therefore, the broken pieces which is the result of the disk D being broken into small pieces can be prevented from scattering outside the electronic apparatus 1 more reliably at the time of rotating the disk D. By disposing the opening and closing door 15 at the opening 4 of the front panel 3, the inside of the electronic apparatus 1 can be prevented from being exposed to the opening 4, and therefore, it is possible to increase beauty of the appearance design of the electronics apparatus 1.

The opening and closing door 15 is rotatably provided at the casing 2 or the like, and by closing the opening 4 by the biasing force of the elastic substance such as the spring 20 which is fixed to the casing 2, scattering of the broken pieces of the disk D to the outside of the electronic apparatus 1 can be prevented, and entry of foreign substances such as dust into the electronic apparatus 1 from the outside can be prevented. The disk tray 11 comes in and goes out by pushing the rear portion of the opening and closing door 15 toward the outside of the electronic apparatus 1 against the biasing force of the spring 20, namely, it becomes possible to properly perform an opening and a closing operations of the opening and closing door 15 corresponding to the transfer operation of making the disk tray 11 come in and go out, and therefore, the opening and closing operation of the opening and closing door 15 can be performed with the simple structure with the small number of components. Thereby, the electronic apparatus 1 at low cost with the number of components reduced can be realized.

Further, when attachable and detachable mounting means which hold the opening and closing door 15 are provided, and for example, the mounting means are a fitting recessed part 16 provided at the front panel 3 and the projected shaft part 17 which is provided at the opening and closing door 15 and is to be attached to the fitting recessed part 16, the opening and closing door 15 can be repeatedly attached to the front panel 3 by attaching the shaft part 17 to the fitting recessed part 16, and therefore, even if the opening and closing door 15 is broken, it can be easily replaced with another opening and closing door.

When the boss parts 12 are molded integrally with the disk tray 11 by the molding die, it becomes unnecessary to assemble a member of another piece which prevents scattering of the broken pieces of the disk D to the disk tray 11 or the like, and therefore, a burden of the assembling operation can be reduced, thus making it possible to reduce cost.

If a gap exists between the front panel 3 and the disk tray 11, for example, without closing the front portion of the recording and reproducing device 10 with the front panel 3 and the disk tray 11, it becomes possible to prevent scattering of the broken pieces of the disk D which are larger in thickness than the gap to the outside of the electronic apparatus 1 and the broken pieces of the disk D can be prevented from entering the gap by making the gap smaller than the thickness of the disk D which is housed in the recording and reproducing device 10.

The embodiment of the present invention is described in detail above, but the present invention is not limited to the above described embodiment, and various modifications are possible within the range of the spirit of the present invention. For example, two of the boss parts 12 of the disk tray 11 are provided, but the present invention is not limited to this, and the number of the boss parts 12 may be properly selected if only the number is plural, namely, three, four, five, or more.

According to the electronic apparatus including a recording and reproducing device of claim 1 of the present invention, in the electronic apparatus including a recording and reproducing device having at least a disk tray on which a disk is placed and a turn table which rotationally drives the disk placed on the above described disk tray inside an electronic apparatus constructing an outer shell by a casing with a front portion opened and a front panel mounted to the opened front portion of the casing, a recessed part is formed at an edge portion of an opening which is formed in the above described front panel and from which the above described disk tray is made to come in and go out, the above described recessed part and a projected boss part provided at the upper portion of the above described disk tray are disposed to be opposed in a direction in which the above described disk tray comes in and goes out, the above described recessed part and the above described boss part are provided side by side in a width direction of the above described electronic apparatus when the above described disk is rotationally driven by the above described turn table, and a gap between the above described front panel and the above described disk tray is closed by the front panel at which the above described recessed part is formed and the front portion of the above described disk tray provided with the above described boss part so that broken pieces of the above described disk do not jump outside from the above described opening, thus making it possible to provide the electronic apparatus enhanced in safety which can prevent the broken pieces of the broken disk from jumping outside from the gap between the front panel and the disk tray, and prevents the broken pieces from hitting the user using the electronic apparatus and injuring the user.

According to the electronic apparatus including a recording and reproducing device of claim 2 of the present invention, in the electronic apparatus including a recording and reproducing device according to claim 1, an opening and closing door which closes the opening is disposed at the above described opening, and therefore, the broken pieces of the disk are reliably prevented form scattering outside the electronic apparatus by the opening and closing door of the opening of the front panel, thus making it possible to provide the safer electronic apparatus. The inside of the electronic apparatus can be prevented from being exposed from the opening, and therefore, beauty of the appearance design of the electronic apparatus can be enhanced.

According to the electronic apparatus including a recording and reproducing device of claim 3 of the present invention, in the electronic apparatus including a recording and reproducing device according to claim 2, the above described opening and closing door is rotatably provided and closes the opening by a biasing force of an elastic body. Therefore, the broken pieces of the disk can be prevented from scattering outside the electronic apparatus, and entry of foreign substances such as dust into the electronic apparatus from outside can be prevented. The disk tray comes in and goes out from the opening against the biasing force of the elastic body, whereby the opening and closing of the opening and closing door can be easily performed, and therefore, the electronic apparatus at low cost with the number of components reduced without having a complicated mechanism can be realized.

According to the electronic apparatus including a recording and reproducing device of claim 4 of the present invention, in the electronic apparatus including a recording and reproducing device according to claim 3, attachable and detachable mounting means which hold the above described opening and closing door are provided, and therefore, the opening and closing door can be replaced when the opening and closing door is broken. Therefore, the replacement operation can be performed easily, and the broken pieces of the disk can be prevented from jumping outside the electronic apparatus, and a user or the like can be prevented from being injured by such an unforeseen accident.

According to the electronic apparatus including a recording and reproducing device of claim 5 of the present invention, in the electronic apparatus including a recording and reproducing device according to claim 4, the above described mounting means are a fitting recessed part provided at the above described front panel and a projected shaft part which is provided at the above described opening and closing door and is to be attached to this fitting recessed part, and by attaching the shaft part to the fitting recessed part, it becomes possible to attach the opening and closing door to the front panel repeatedly. The opening and closing door can be easily replaced with another opening and closing door when the opening and closing door is broken, the broken pieces of the disk can be prevented from jumping outside the electronic apparatus, and the user or the like can use the electronic apparatus safely.

## Claims

1. An electronic apparatus including a recording and reproducing device having at least a disk tray on which a disk is placed and a turn table which rotationally drives the disk placed on said disk tray inside an electronic apparatus constructing an outer shell by a casing with a front portion opened and a front panel mounted to the opened front portion of the casing, **characterized in that** a recessed part is formed at an edge portion of an opening which is formed in said front panel and from which said disk tray is made to come in and go out, said recessed part and a projected boss part provided at the upper portion of said disk tray are disposed to be opposed in a direction in which said disk tray comes in and goes out, said recessed part and said boss part are provided side by side in a width direction of said electronic apparatus when said disk is rotationally driven by said turn table, and a gap between said front panel and said disk tray is closed by the front panel at which said recessed part is formed and the front portion of said disk tray provided with said boss part so that broken pieces of said disk do not jump outside from said opening.

2. The electronic apparatus including a recording and reproducing device according to claim 1, **characterized in that** an opening and closing door which closes the opening is disposed at said opening.

3. The electronic apparatus including a recording and reproducing device according to claim 2, **characterized in that** said opening and closing door is rotatably provided, and closes said opening by a biasing force of an elastic body.

4. The electronic apparatus including a recording and reproducing device according to claim 3, **characterized in that** attachable and detachable mounting means which hold said opening and closing door are provided.

5. The electronic apparatus including a recording and reproducing device according to claim 4, **characterized in that** said mounting means are a fitting recessed part provided at said front panel, and a projected shaft part which is provided at said opening and closing door and is to be attached to this fitting recessed part.
